# EUROPÄISCHE PATENTSCHRIFT

(11) **EP 3 718 095 B1**
(45) Veröffentlichungstag und Bekanntmachung des Hinweises auf die Patenterteilung: **14.01.2026**
(21) Anmeldenummer: 18792382.6
(22) Anmeldetag: 12.10.2018
(51) Int. Cl.: G08G 1/01, B60W 50/08, G08G 1/16, G08G 1/0967

(54) **VERFAHREN ZUM EINSTELLEN VOLLAUTOMATISCHER FAHRZEUGFÜHRUNGSFUNKTIONEN IN EINER VORDEFINIERTEN NAVIGATIONSUMGEBUNG UND KRAFTFAHRZEUG**
METHOD FOR ADJUSTING FULLY AUTOMATIC VEHICLE GUIDANCE FUNCTIONS IN A PREDEFINED NAVIGATION ENVIRONMENT AND MOTOR VEHICLE
PROCÉDÉ DE RÉGLAGE DE FONCTIONS DE GUIDAGE DE VÉHICULE ENTIÈREMENT AUTOMATISÉES DANS UN ENVIRONNEMENT DE NAVIGATION PRÉDÉTINÉ ET VÉHICULE AUTOMOBILE

(30) Priorität: 28.11.2017 DE 102017221286
(43) Veröffentlichungstag der Anmeldung: 07.10.2020
(73) Patentinhaber: Audi AG, 85045 Ingolstadt (DE)
(72) Erfinder: SCHULLER, Florian, 85737 Ismaning (DE); FEIST, Christian, 85049 Ingolstadt (DE)
(86) Internationale Anmeldenummer: PCT/EP2018/077840
(87) Internationale Veröffentlichungsnummer: WO 2019/105640

(56) Entgegenhaltungen:
- DE-A1- 102010 022 706
- DE-A1- 102011 014 083
- DE-A1- 102012 016 802
- DE-A1- 102015 204 861
- DE-A1- 102015 217 388
- US-A1- 2017 234 689

## Beschreibung

Die Erfindung betrifft ein Verfahren zum Einstellen von durch ein Fahrzeugsystem eines Kraftfahrzeugs realisierten, vollautomatischen Fahrzeugführungsfunktionen beim Betrieb der Kraftfahrzeuge in einer vordefinierten Navigationsumgebung, nämlich einer Parkumgebung, wobei der Navigationsumgebung eine stationäre, mit den Kraftfahrzeugen kommunizierende Infrastruktureinrichtung zugeordnet ist und Funktionsgrenzen der jeweiligen Fahrzeugführungsfunktionen durch Grenzbetriebsparameter der Fahrzeugführungsfunktion definiert sind. Daneben betrifft die Erfindung ein Kraftfahrzeug.

Der autonome Betrieb von Kraftfahrzeugen, insbesondere also die Realisierung von vollautomatischen Fahrzeugführungsfunktionen, stellt ein aktuelles, wichtiges Forschungsthema dar. Die entsprechenden Fahrzeugsysteme führen zur Realisierung der Fahrzeugführungsfunktion Fahrtplanungen durch, sowohl was die Route als auch eine aktuell zu realisierende Trajektorie angeht. Hierzu liegt in den Kraftfahrzeugen eine Vielzahl von Informationen vor, insbesondere Sensordaten einer kraftfahrzeugseitigen Sensorik, die den aktuellen Betriebszustand des Kraftfahrzeugs und die aktuelle Verkehrssituation im Erfassungsbereich um das Kraftfahrzeug beschreiben, sowie digitale Kartendaten, die zur ergänzenden Beschreibung der aktuellen Verkehrssituation und zur Routenplanung herangezogen werden können. Ein wesentlicher weiterer Aspekt vollautomatisierter Fahrzeugführungsfunktionen ist die Sicherheit, weswegen sowohl die Fahrtplanung zur Vermeidung von Kollisionen mit statischen oder dynamischen Hindernissen erfolgt als auch zusätzliche Sicherheitssysteme, die dem Kollisionsschutz dienen, innerhalb des Kraftfahrzeugs vorgesehen sein können.

Im Rahmen einer vollautomatischen Fahrzeugführung können Kraftfahrzeuge auch mit Infrastruktureinrichtungen kommunizieren, insbesondere solchen, die einer aktuell befahrenen, vordefinierten Navigationsumgebung, beispielsweise einer Parkumgebung wie einem Parkhaus, zugeordnet sind. Der Aufbau einer entsprechenden Kommunikationsverbindung erfolgt hierbei meist über Kurzstreckenkommunikation, beispielsweise WLAN. Dabei wurden bislang unterschiedliche Konzepte zur vollautomatisierten Fahrzeugführung in derartigen Navigationsumgebungen, insbesondere Parkumgebungen, vorgeschlagen, beispielsweise solche, in denen die Koordination des vollautomatisierten Betriebs in größerem Maße durch die Infrastruktureinrichtung erfolgt oder aber auch solche, in denen lediglich Vorgaben, beispielsweise Zielpunkte, durch die Infrastruktureinrichtung bereitgestellt werden, während das jeweilige Kraftfahrzeug seine vollautomatische Fahrzeugführung autonom anhand dieser Vorgaben umsetzt.

Der autonome Betrieb von Kraftfahrzeugen außerhalb solcher vorbestimmter Navigationsumgebungen, beispielsweise Parkumgebungen, gestaltet sich als komplexer in der Ausgestaltung. Beispielsweise beschreibt DE 10 2014 014 120 A1 eine Vielzahl von Bedingungen zum autonomen Betreiben eines Fahrzeugs auf einer vorausliegenden Fahrstrecke, die zu erfüllen sind, um eine vollautomatische Fahrzeugführungsfunktion zu aktivieren. Diese Bedingungen umfassen beispielsweise, dass auf mindestens einer Seite einer aktuellen Fahrbahn des Fahrzeugs eine bauliche Trennung vorhanden ist, eine Fahrspur des Fahrzeugs eine Mindestfahrspurbreite aufweist, die Reichweite von Umgebungserfassungssensoren wesentlich einschränkende Kuppen und Senken vorhanden sind, die Anzahl der Fahrspuren sich nicht ändert, kein Tunnel vorhanden ist und dergleichen. Auch Verkehrsmeldungen können berücksichtigt werden. Es geht dort mithin um im Wesentlichen statische, höchstens auf langen Zeitskalen veränderliche Eigenschaften eines vorausliegenden Streckenabschnitts als Bedingung für das Zulassen eines autonomen Betriebs.

DE 10 2014 013 672 A1 betrifft ein Verfahren und ein System zur Absicherung eines autonomen oder teilautonomen Betriebs von Fahrzeugen auf einem Verkehrsstreckennetz. Dabei wird eine Information zur Geeignetheit einer Strecke für einen autonomen oder teilautonomen Betrieb von Fahrzeugen ermittelt, wobei ein externer Server, der die Informationen zur Geeignetheit sammelt, eine Erlaubnisinformation zur Zulässigkeit der Strecke für den autonomen oder teilautonomen Betrieb von Fahrzeugen abhängig hiervon ermittelt und Fahrzeugen bereitstellt. Die Information zur Geeignetheit kann eine Begründung und/oder eine Erläuterung zu der ermittelten Geeignetheit umfassen, um temporäre Ursachen nicht pauschal zur Nichterteilung und der Erlaubnisinformation führen zu lassen. Die Erlaubnisinformation kann allerdings aktuelle Verkehrsinformationen zu Staus, Unfällen, Baustellen oder dergleichen beachten. Auch hier geht es um die grundsätzliche Zulässigkeit einer vollautomatischen Fahrzeugführung in Abhängigkeit von zeitlich äußerst langsam veränderlichen oder gar statischen Umständen.

Um die möglichst weitgehende Sicherheit bei der Nutzung einer automatischen Fahrzeugführungsfunktion gewährleisten zu können, sind der vollautomatischen Fahrzeugführung üblicherweise Funktionsgrenzen gesetzt, beispielsweise maximal zulässige Geschwindigkeiten, maximal zulässige Veränderungen diverser Betriebsparameter, erlaubte Fahrmanöver und dergleichen. Diese Funktionsgrenzen können durch Grenzbetriebsparameter der Fahrzeugführungsfunktion festgelegt sein. Der Festlegung der Funktionsgrenzen liegt eine Risikoabschätzung aufgrund der Erfassung der Verkehrssituation durch das Kraftfahrzeugs zugrunde. Beispielsweise aufgrund der räumlich eingeschränkten Erfassungsbereiche von Umfeldsensoren des Kraftfahrzeugs ist ein eingeschränkter Informationshorizont bzw. Informationsradius eines Kraftfahrzeugs gegeben. Das bedeutet, die Auslegung der Funktionsgrenzen, beispielsweise der Maximalgeschwindigkeit, erfolgt entsprechend der technischen Möglichkeiten im Kraftfahrzeugs, wobei bestimmte Szenarien/Verkehrssituationen auch gänzlich einen autonomen Betrieb des Kraftfahrzeugs durch die vollautomatische Fahrzeugführungsfunktion ausschließen können. Derartige Einschränkungen haben jedoch eine ungünstige Auswirkung auf die Rezeption durch Fahrer zur Folge, nachdem die allgemeine Tauglichkeit der Fahrzeugführungsfunktion durch risikoarmes Verhalten herabgesetzt wird. Beispielsweise können aufgrund der Funktionsgrenzen sehr langsame Geschwindigkeiten, lange Plausibilisierungszeiten, gegebenenfalls im Fahrzeugstillstand, und dergleichen auftreten. Mit anderen Worten werden die Funktionsgrenzen im Hinblick auf den "worst case" gewählt.

DE 10 2015 217 388 A1 offenbart ein Verfahren zum Betreiben eines Parkplatzes. Hierbei ist eine Umfeldsensorik zum Erfassen eines Umfelds eines innerhalb des Parkplatzes autonom fahrenden Kraftfahrzeugs vorgesehen, wobei hieraus entsprechende Umfelddaten betreffend das Kraftfahrzeug ermittelt werden. Das Kraftfahrzeug kann anhand einer digitalen Karte eigenständig zu einer Zielposition innerhalb des Parkplatzes navigieren. Eine Prüfeinrichtung prüft, ob das Umfeld des Kraftfahrzeugs frei von Objekten ist, die mit einer gewissen Wahrscheinlichkeit mit dem Kraftfahrzeug kollidieren könnten. Falls dem so ist, wird dem Kraftfahrzeug ein entsprechendes Freigabesignal gesendet.

DE 10 2015 204 861 A1 betrifft ein Parksystem für autonom auf einem Parkplatz fahrende Fahrzeuge. Positionsdaten werden an das Kraftfahrzeug übermittelt, wobei diese die Positionen betreffen, an denen Probleme vorliegen könnten. Ferner empfängt das Kraftfahrzeug Informationsdaten, insbesondere zusammen mit einer digitalen Karte des Parkplatzes, wobei die Informationsdaten die Information, dass es an den jeweiligen Orten zu Problemen kommen könnte, betreffen. Probleme im dortigen Sinne können sein, dass an dem entsprechenden Ort beispielsweise eine Umfeldsensorik des Fahrzeugs das Umfeld des Fahrzeugs nur eingeschränkt erfassen kann, es wiederholt zu Kommunikationsverbindungsproblemen zu Fahrzeugen gekommen ist oder es auf Grund der Topographie des Parkplatzes zu Radarechos kommen könnte. Anhand dieser Informationen wird sodann die autonome Fahrt des Kraftfahrzeugs zum Parkplatz entsprechend geplant, wobei diese Planung beispielsweise eine Reduktion der Geschwindigkeit des Kraftfahrzeugs beinhalten kann.

DE 10 2011 014 083 A1 betrifft ein Fahrerassistenzsystem, bei dem ein Parameter, insbesondere hinsichtlich einer Verkehrsdichte in der Umgebung des Kraftfahrzeugs, ermittelt wird, wobei anhand dieses Parameters ein Schwellwert bzw. Betätigungsgrad des Fahrerassistenzsystems für ein automatisches Betätigen eines Elements des Kraftfahrzeugs eingestellt wird. Dies kann beispielsweise eine Warnvorrichtung zur Ausgabe eines Warnsignals, ein automatisches Betätigen einer Bremsvorrichtung oder eine automatische Abstandsregelung betreffen.

In DE 10 2010 002 706 A1 ist ein Verfahren zur adaptiven Parametrisierung eines Fahrerassistenzsystems, betreffend die Ansteuerung einer nicht reversiblen Aktuatorik (z.B. Airbag), offenbart. Hierbei erfolgt eine Klassifizierung der Umgebung des Kraftfahrzeugs, anhand derer eine Anpassung der Wertebereiche der adaptiven Parameter erfolgt. Mit anderen Worten wird also anhand der Klassifizierung ein Schwellwert angepasst, bei dessen Überschreiten die nicht reversible Aktuatorik ausgelöst wird.

DE 10 2012 016 802 A1 offenbart ein Verfahren zur Steuerung eines zum autonomen Betrieb eines Kraftfahrzeugs ausgebildeten Fahrzeugsystems, bei dem aus einer eine aktuelle Position des Kraftfahrzeugs beschreibenden Ortsinformation und wenigstens einer ortsbezogenen, die Zulässigkeit der Nutzung des Fahrzeugsystems betreffenden Erlaubnisinformation eine Einstellinformation für das Fahrzeugsystem ermittelt wird und wenigstens ein Betriebsparameter des Fahrzeugsystems in Abhängigkeit von der Einstellinformation gewählt wird.

US 2017/0234689 A1 betrifft eine Echtzeit-Risikoabschätzung zur Verbesserung der Sicherheit von Fahrzeugen, die in halbautonomen oder vollautonomen Modi arbeiten. Straßensegmenten können Risikowerte zugeordnet werden, um weniger risikoreiche Routen zu verwenden, Versicherungen anzupassen, und auch unsichere Straßensegmente für halbautonomen oder autonomen Betrieb zu ermitteln und den Fahrer auf diese hinzuweisen. Während allgemeine Datenquellen andauernde Zustände auf den Straßensegmenten und Zwischenfälle, insbesondere Unfälle, der Vergangenheit betreffen, können Modifikationen der Risikowerte auch aufgrund von Echtzeitdaten erfolgen (beispielsweise Schneefall). Übernimmt ein Fahrer dann, wenn er in einen nichtautonomen Modus wechseln sollte, nicht, kann eine dritte Partei die Steuerung des Kraftfahrzeugs nach Art einer Drohne übernehmen. Echtzeit-Informationen wie das Vorliegen von Nebel, schwarzem Eis (Glatteis) oder Regen können bei der Steuerung des Kraftfahrzeugs berücksichtigt werden. Die Echtzeit-Informationen können durch andere Kraftfahrzeuge oder aber auch Infrastruktur gewonnen werden.

Der Erfindung liegt daher die Aufgabe zugrunde, eine Möglichkeit zur verbesserten Risikoabschätzung und somit situationsabhängigen Erweiterungen der Funktionsgrenzen einer vollautomatischen Fahrzeugführungsfunktion eines Kraftfahrzeugs anzugeben.

Zur Lösung dieser Aufgabe sind bei einem Verfahren der eingangs genannten Art erfindungsgemäß die Merkmale des Anspruchs 1 vorgesehen. Diese umfassen insbesondere, dass seitens der Infrastruktureinrichtung mittels wenigstens teilweise stationär festinstallierter Umgebungssensoren der Navigationsumgebung eine aktuelle dynamische Objekte in der Navigationsumgebung beschreibende Verkehrssituationsinformation ermittelt und gemeinsam mit einer stationäre Objekte und Eigenschaften der Navigationsumgebung beschreibenden digitalen Karte zur Ermittlung wenigstens einer ein Gefährdungs- und/oder Sachschadenpotential beschreibenden Risikoinformation für jedes Kraftfahrzeug unter den dynamischen Objekten verwendet wird, wobei die kraftfahrzeugspezifischen Risikoinformationen an die jeweiligen Kraftfahrzeuge übermittelt werden und das jeweilige Fahrzeugsystem die Grenzbetriebsparameter in Abhängigkeit der Risikoinformation zu engeren Funktionsgrenzen bei einer ein höheres Risiko beschreibenden Risikoinformation und zu erweiterten Funktionsgrenzen bei einer ein niedrigeres Risiko beschreibenden Risikoinformation anpasst.

Erfindungsgemäß wird mithin vorgeschlagen, kontinuierlich (mithin zyklisch) eine Risikoeinschätzung hinsichtlich des Gefährdungs-/Sachschadenpotentials durch eine aktive Infrastruktureinrichtung mit einer Möglichkeit zur Überwachung dynamischer Objekte in der Navigationsumgebung vorzusehen, wobei hierzu insbesondere mittels der Navigationsumgebung zugehörigen Umgebungssensoren Zusatzinformationen vorliegen, die den individuellen Kraftfahrzeugen unbekannt wären, so dass ein vollständiges Bild der (dynamischen) Verkehrssituation innerhalb der Navigationsumgebung als Verkehrssituationsinformation ermittelt werden kann. Dabei können selbstverständlich auch weitere Eingangsdaten in die Ermittlung der Verkehrssituationsinformation eingehen, beispielsweise von Kraftfahrzeugen übermittelte Positionsinformationen und/oder Sensordaten der kraftfahrzeugeigenen Sensorik und/oder Betriebsdaten der jeweiligen Kraftfahrzeuge. Bevorzugt ist jedoch eine Ausgestaltung, in der zumindest hauptsächlich von den Sensordaten der Umgebungssensoren ausgegangen wird.

Die fahrzeugindividuelle Risikoeinschätzung, beschrieben durch eine Risikoinformation, für ein mit der Infrastruktureinrichtung über eine entsprechende Kommunikationseinrichtung kommunizierendes Kraftfahrzeug wird dem entsprechenden Kraftfahrzeug bereitgestellt, welches sein Fahrverhalten auf Grundlage der kommunizierten Risikoeinschätzung entsprechend anpassen kann, insbesondere durch eine entsprechende Anpassung von Funktionsgrenzen. Dies erlaubt es mit besonderem Vorteil, bei einer ein geringes Risiko beschreibenden Risikoinformation die vollautomatische Fahrzeugführungsfunktion aufzuwerten, indem die Funktionsgrenzen erweitert werden, beispielsweise mit höheren Geschwindigkeiten und/oder schnellerer Anpassung der Fahrzeugdynamik gearbeitet werden kann, was die Akzeptanz und Bewertung durch den Fahrer erhöht. Auf der anderen Seite wird bei einer ein hohes Risiko anzeigenden Risikoinformation im Sinne der Sicherheit gegebenenfalls eine Einengung der Funktionsgrenzen vorgesehen, um Kollisionen/Beschädigungen möglichst auszuschließen.

Hierdurch ergeben sich auch neben der Erhöhung der Fahrerakzeptanz durch Vermeidung einer Auslegung des Fahrverhaltens auf den durch die fahrzeugseitigen Rahmenbedingungen festgelegten "worst case" weitere Vorteile. So ist es möglich, automatisierte Fahrfunktionen mit reduziertem technischen Aufwand auf Kraftfahrzeugseite, beispielsweise was die Sensorik und/oder die Rechenleistung angeht, bereitzustellen. Die Einsatzmöglichkeiten von autonomen Kraftfahrzeugen in Navigationsumgebungen, die nicht ausschließlich durch fahrzeugseitige Technik zu beherrschen sind, werden erweitert. Ferner ergibt sich die Möglichkeit zum Einbeziehen einer erweiterten Informationsbasis, beispielsweise die Berücksichtigung von spezifischen Gegebenheiten in lokalen Navigationsumgebungen, welche beispielsweise innerhalb der digitalen Karte beschrieben sein können.

Mit besonderem Vorteil wird auch die industrielle Umsetzung vollautomatisierter Fahrzeugführungsfunktionen durch die vorliegende Erfindung begünstigt, da eine klare Verantwortungstrennung für die Risikoabschätzung auf Kraftfahrzeugseite und Infrastrukturseite ermöglicht wird, insbesondere, indem auch eine zu starke Verflechtung des Betriebs, beispielsweise ein ständiges Zusammenwirken von Infrastruktureinrichtung und Fahrzeugsystem, eher vermieden wird und stattdessen der übliche Funktionsbetrieb anhand der kraftfahrzeugseitig vorliegenden Informationen unverändert aufrechterhalten werden kann, nachdem lediglich Randbedingungen, konkret die Funktionsgrenzen, in Abhängigkeit der bevorzugt einfach gehaltenen Risikoinformation an die aktuelle Verkehrssituation adaptiert werden. Insbesondere ermöglicht die vorliegende Erfindung zusammenfassend also die Aufwertung von vollautomatischen Fahrzeugführungsfunktionen auf Basis einer dynamischen Risikoeinschätzung (Gefährdungs-/Sachschadenspotential) auf Basis infrastrukturseitig generierter (Umgebungssensor-) Informationen zur Laufzeit. Dies ergibt eine situative (aufgrund der Berücksichtigung der dynamischen Verkehrssituation) Adaption des autonomen Betriebs von Kraftfahrzeugen unter situationsabhängiger Erweiterung/Einschränkung der Funktionsgrenzen.

Erfindungsgemäß ist vorgesehen, dass die Kraftfahrzeuge und/oder weitere dynamische Objekte, die mit der Infrastruktureinrichtung kommunizieren, wenigstens einen eine maximal mögliche und/oder geplante Dynamik beschreibenden Handlungsparameter an die Infrastruktureinrichtung übermitteln und die jeweiligen Handlungsparameter bei der Ermittlung der Risikoinformation berücksichtigt werden. Dies ist insbesondere im Hinblick auf eine Risikoeinschätzung im Rahmen der Detektion des zukünftigen Verhaltens der dynamischen Objekte äußerst nützlich, da die Handlungsparameter im Wesentlichen einer Zusicherung/Beschränkung der möglichen zukünftigen Dynamik entsprechen. Letztlich beschreiben die Handlungsparameter also zugesicherte und eingehaltene dynamische Fähigkeiten, beispielsweise eine zugesicherte Fahrzeugdynamik und/oder einen eingehaltenen Anhalteweg, wobei die Handlungsparameter bevorzugt dynamisch zur Laufzeit durch die Kraftfahrzeuge und/oder dynamischen Objekte aktuell zur Verfügung gestellt werden. Beispielsweise kann als Handlungsparameter eine maximale Geschwindigkeit und/oder eine maximale Beschleunigung und/oder ein eine maximal mögliche Richtungsänderung beschreibender Richtungsparameter und/oder eine geplante Trajektorie beschreibende Trajektorienparameter und/oder ein zugesicherter Anhalteweg verwendet werden. Ersichtlich kann auch ein Zusammenhang mit den Funktionsgrenzen bei autonom betriebenen Kraftfahrzeugen in der Navigationsumgebung bestehen, so dass die Handlungsparameter wenigstens teilweise aus den Grenzbetriebsparametern und/oder als diese ermittelt werden können.

Dabei sei darauf hingewiesen, dass vorgesehen sein kann, dass nicht mit der Infrastruktureinrichtung kommunizierenden dynamischen Objekten und/oder keine Handlungsparameter liefernden dynamischen Objekten, beispielsweise Fußgängern, Handlungsparameter zugeordnet werden können, insbesondere basierend auf einer Klassifizierung des entsprechenden dynamischen Objekts. Beispielsweise ist bei Fußgängern als dynamische Objekte deren typisches Verhalten und/oder deren typischer Dynamikspielraum bekannt und kann, beispielswiese aus einer Datenbank abgerufen, herangezogen werden.

Besonders vorteilhaft ist es ferner, wenn mittels der Handlungsparameter ein Aktionsbereich des jeweiligen dynamischen Objekts und/oder eine Kollisionswahrscheinlichkeit mit anderen dynamischen Objekten, insbesondere über wenigstens einen Prädiktionszeitraum, ermittelt und bei der Ermittlung der kraftfahrzeugspezifischen Risikoinformation verwendet wird. Allgemein gesagt bewertet die Infrastruktureinrichtung kontinuierlich basierend auf statischen Daten (digitale Karte), beispielsweise der Gebäudegeometrie im Fall eines Parkhauses, und dynamischen Daten (der Situationsinformation) das Risiko für jedes mit der Infrastruktureinrichtung kommunizierende, innerhalb der Navigationsumgebung betriebene Kraftfahrzeug zum aktuellen Zeitpunkt, wobei hierdurch der Einfluss der statischen Objekte, beispielsweise von Sichtverdeckungen durch Wände und/oder parkende Fahrzeuge, und das Verhalten anderer Verkehrsteilnehmer, beispielsweise nahe Fahrstraßen laufende Fußgänger, berücksichtigt werden können. Besonders bietet sich zur konkreten Auswertung dabei die Verwendung von Kollisionsalgorithmen an, wie sie in ähnlicher, gegebenenfalls anders parametrierter Form auch von Sicherheitssystemen von Kraftfahrzeugen bekannt sind. Dabei wird letztlich das Verhalten anderer dynamischer Objekte für einen Prädiktionszeitraum in die Zukunft prädiziert, um eine Kollisionswahrscheinlichkeit abzuleiten, welche eine Grundlage für die Risikoeinschätzung und somit die Risikoinformation bilden kann. Bei der im Rahmen eines solchen Kollisionsalgorithmus vorzunehmenden Prädiktion erweisen sich die Handlungsparameter als besonders nützlich, da die Zahl möglicher, abzudeckender Verhaltensfälle und/oder deren Gewichtung deutlich besser eingeschätzt werden kann.

Vorzugsweise kann in die Ermittlung der Risikoinformation wenigstens eine in der Vergangenheit eingetretene Schadensfälle und/oder Risikofälle beschreibende Historieninformation eingehen, die seitens der Infrastruktureinrichtung vorgehalten und/oder ermittelt wird. Das Wissen über in der Vergangenheit eingetretene Probleme, beispielsweise Unfälle und/oder Fast-Unfälle, beschreibt letztlich spezifische Gegebenheiten innerhalb der Navigationsumgebung und kann entsprechend berücksichtigt werden, beispielsweise, indem auf grundsätzliche bekannte Arten besonders sicherheitskritische Stellen identifiziert und beispielsweise innerhalb der digitalen Karte markiert bzw. entsprechend gekennzeichnet werden. Dies erlaubt es Kraftfahrzeugen, an unfallträchtigen Stellen besondere Vorsicht walten zu lassen, insbesondere dann, wenn andere dynamische Objekte in diesem Bereich anwesend sind. So wird weiterer Vorteil aus der breiten infrastrukturseitig vorliegenden Informationsbasis gezogen.

In einer zweckmäßigen Ausgestaltung kann die Risikoinformation eine von mehreren diskreten Risikostufen beschreibend ermittelt werden, wobei den Risikostufen jeweils einzustellende Grenzbetriebsparametersätze zugeordnet sind. Hierdurch entstehen also den Risikostufen in den Kraftfahrzeugen zugeordnete, wenigstens durch die Grenzbetriebsparametersätze beschriebene Betriebsmodi, die entsprechend der dynamischen und statischen Beurteilung der Verkehrssituation eingestellt werden können. Um eine möglichst wenig komplexe, aber effektive Realisierung des erfindungsgemäßen Vorgehens zu erreichen und insbesondere auch die klare Verantwortungstrennung zu unterstützen, wird mithin vorgeschlagen, als wenigstens einen Teil der Risikoinformation eine einfach zu handhabende, insbesondere zur Auswahl eines Grenzbetriebsparametersatzes zu verwendende Risikogröße einzusetzen, die die Risikostufe für das individuelle Kraftfahrzeug beschreibt.

Dabei sei an dieser Stelle noch darauf hingewiesen, dass das Kraftfahrzeug bzw. konkret das die vollautomatische Fahrzeugführungsfunktion realisierende Fahrzeugsystem die empfangene Risikoinformation eigenverantwortlich interpretiert und auf dieser Basis unterstütze Verhaltensänderungen einleitet. Mithin kann auch hier die bereits angedeutete Verantwortungstrennung weiter propagiert werden.

Erfindungsgemäß beschreiben die Grenzbetriebsparameter eine maximal zulässige Dynamik im Rahmen der vollautomatischen Fahrzeugführung. Zusätzlich können sie zulässige Fahrmanöver beschreiben. Beispielsweise können in unübersichtlichen und/oder von vielen dynamischen Objekten belegten Bereichen Maximalgeschwindigkeiten und somit insbesondere auch aktuelle Geschwindigkeiten des Kraftfahrzeugs reduziert werden. Denkbar ist es auch, bestimmte Fahrmanöver nur bei niedrigem Risiko zuzulassen bzw. zusätzlich freizuschalten, oder aber insgesamt dynamischere Fahrmanöver durch eine entsprechende Anhebung von Funktionsgrenzen bezüglich der maximal zulässigen Dynamik zu erlauben.

In einer bevorzugten Ausgestaltung kann vorgesehen sein, dass wenigstens ein weiterer Betriebsparameter der Fahrzeugführungsfunktion und/oder des Fahrzeugsystems und/oder eines anderen Fahrzeugsystems des Kraftfahrzeugs in Abhängigkeit der Risikoinformation angepasst wird. Bei dem anderen Fahrzeugsystem kann es sich insbesondere um ein Sicherheitssystem des Kraftfahrzeugs handeln. Beispielsweise können die weiteren Betriebsparameter konkret die Vorkonditionierung wenigstens eines des wenigstens einen anderen Fahrzeugsystems, insbesondere eines Sicherheitssystems, und/oder die Erfassungseigenschaften wenigstens eines Sensors des Kraftfahrzeugs betreffen. Wird beispielsweise als Risikoinformation auch eine Risikoklasse und/oder ein räumlicher Risikobereich und/oder ein Risikoobjekt, welches ein statisches und/oder ein dynamisches Objekt sein kann, übermittelt, ist es insbesondere auch möglich, den Betrieb des Kraftfahrzeugs auch über die Funktionsgrenzen hinaus an die in diesem Fall bevorzugt dezidiertere Risikoinformation anzupassen. Beispielsweise kann die kraftfahrzeugseitige Sensorik und/oder die kraftfahrzeugseitige Rechenkapazität auf für ein durch die Risikoinformation angezeigtes Risiko angemessene Bereiche fokussiert werden und dergleichen. Bei einer hohen Kollisionsgefahr können beispielsweise zur Erhöhung der Sicherheit Sicherheitssysteme durch Anpassung von deren Betriebsparametern vorkonditioniert werden, so dass beispielsweise bei einer tatsächlich eintretenden Kollision eine schnellere Reaktion möglich ist.

Wie bereits erwähnt, werden insbesondere die Risikoinformationen für die einzelnen Kraftfahrzeuge, bevorzugt aber auch die Handlungsparameter möglichst häufig aktualisiert, mithin aktuell gehalten, indem beispielsweise eine zyklische Neuermittlung der Risikoinformation durchgeführt wird und/oder Handlungsparameter bei deren Veränderung aktualisiert an die Infrastruktureinrichtung weitergegeben werden. Dies betrifft insbesondere auch die Anpassung von Funktionsgrenzen und somit konsequenterweise auch von entsprechenden Handlungsparametern, so dass eine Art "Rückkopplung" auf derart abgestimmte Verbesserungen entsteht.

Wie bereits erwähnt, wird bevorzugt die eigentliche Durchführung der Fahrzeugführungsfunktion innerhalb des Kraftfahrzeugs möglichst wenig beeinflusst, sondern bevorzugt lediglich deren Randbedingungen anhand der Risikoabschätzung seitens der Infrastruktureinrichtung angepasst. So kann vorgesehen sein, dass die Trajektorienberechnung und/oder die Kollisionsberechnung im Rahmen der Fahrzeugführungsfunktion innerhalb des Kraftfahrzeugs und abhängig von durch die kraftfahrzeugseitige Sensorik ermittelten Sensordaten erfolgt. Insbesondere kann eine ausschließliche Abhängigkeit hinsichtlich der Sensordaten von der kraftfahrzeugseitigen Sensorik vorgesehen sein, um die bereits beschriebene, mögliche klare Verantwortungstrennung zu realisieren. Es kann mithin gesagt werden, dass die vollautomatische Fahrzeugführungsfunktion innerhalb des Kraftfahrzeugs technisch unverändert bleiben kann, da die Risikoinformation nur Einfluss auf die Parametrierung nimmt. Dies erlaubt eine vereinfachte Umsetzung des erfindungsgemäßen Vorgehens, nachdem letztlich nur Hinzufügungen, beispielsweise die Veränderbarkeit der Grenzbetriebsparameter, notwendig sind.

In einer besonders vorteilhaften Ausgestaltung der vorliegenden Erfindung kann vorgesehen sein, dass in der auch den Kraftfahrzeugen vorliegenden digitalen Karte der Navigationsumgebung Unterbereiche, für die, insbesondere aufgrund der Abdeckung durch die Umgebungssensoren, eine Ermittlung der Risikoinformation möglich ist, markiert sind, wobei die Unterbereiche bei der Routenplanung innerhalb des Kraftfahrzeugs berücksichtigt werden. Dabei kann vorzugsweise die Routenplanung die Durchquerung von Unterbereichen maximierend erfolgen. Mit anderen Worten werden Unterbereiche, in denen eine Unterstützung des Kraftfahrzeugs durch eine Risikoinformation aus der Infrastruktureinrichtung möglich ist, in der digitalen Karte hinterlegt und entsprechend markiert. Dadurch kann eine vorteilhafte Planung der Fahrvorgänge auf Kraftfahrzeugseite erfolgen, um beispielsweise für eingeschränktere Kraftfahrzeuge eine Route mit maximaler Unterstützungsabdeckung zu planen. Für die Unterbereiche ist also bekannt, dass dynamisch bereitgestellte Risikoinformationen durch die aktive Infrastruktur erhalten werden können.

Neben dem Verfahren betrifft die vorliegende Erfindung auch ein Kraftfahrzeug mit den Merkmalen des Anspruchs 11. Das Kraftfahrzeug weist ein eine vollautomatische Fahrzeugführungsfunktion zumindest innerhalb einer Navigationsumgebung, nämlich einer Parkumgebung, realisierendes Fahrzeugsystem und eine Kommunikationseinrichtung zur Kommunikation mit einer der Navigationsumgebung zugeordneten Infrastruktureinrichtung auf, wobei Funktionsgrenzen der Fahrzeugführungsfunktion durch Grenzbetriebsparameter der Fahrzeugführungsfunktion definiert sind, wobei die Grenzbetriebsparameter eine maximal zulässige Dynamik im Rahmen der vollautomatischen Fahrzeugführung beschreiben, wobei sich das Kraftfahrzeug dadurch auszeichnet, dass ein Steuergerät des Fahrzeugsystems zur Anpassung der Grenzbetriebsparameter in Abhängigkeit einer von der Infrastruktureinrichtung empfangenen Risikoinformation zu engeren Funktionsgrenzen bei einer ein höheres Risiko beschreibenden Risikoinformation und zu weiteren Funktionsgrenzen bei einer ein niedrigeres Risiko beschreibenden Risikoinformation und zur Übermittlung wenigstens eines eine maximal mögliche und/oder geplante Dynamik beschreibenden Handlungsparameters an die Infrastruktureinrichtung zur Berücksichtigung bei der Er-mittlung der Risikoinformation ausgebildet ist. Das Kraftfahrzeug ist also zur Nutzung einer von einer externen Infrastruktureinrichtung bereitgestellten Risikoinformation ausgebildet und kann im Rahmen des erfindungsgemäßen Verfahrens eingesetzt werden. Sämtliche Ausführungen bezüglich des erfindungsgemäßen Verfahrens, die das Kraftfahrzeug betreffen, können entsprechend auf das erfindungsgemäße Kraftfahrzeug angewendet werden, so dass mit diesem ebenso die bereits genannten Vorteile erhalten werden können.

Denkbar ist auch die Realisierung eines Kommunikationssystems in einer Navigationsumgebung mit einer Infrastruktureinrichtung und mehreren Kraftfahrzeugen, wobei die Infrastruktureinrichtung und jeweilige Steuergeräte der Kraftfahrzeuge zur Durchführung des erfindungsgemäßen Verfahrens ausgebildet sind.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein Ablaufdiagramm zur Erläuterung des erfindungsgemäßen Verfahrens,
- Fig. 2: schematisch eine Navigationsumgebung mit Verkehrssituationen, und
- Fig. 3: eine Prinzipskizze eines Kraftfahrzeugs.

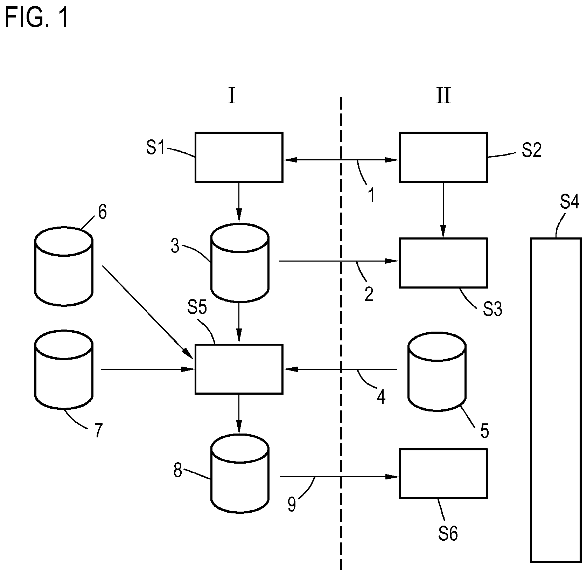

Im Folgenden soll nun ein Ausführungsbeispiel des erfindungsgemäßen Verfahrens dargestellt werden, wie es in einer Parkumgebung, insbesondere einem Parkhaus, als Navigationsumgebung durchgeführt werden kann. Die Parkumgebung umfasst dabei eine Infrastruktureinrichtung sowie Umgebungssensoren, die ihre Umgebungssensordaten an die Infrastruktureinrichtung liefern. Innerhalb der Parkumgebung betriebene Kraftfahrzeuge nutzen eine kraftfahrzeugseitige Kommunikationseinrichtung, um über eine infrastruktureinrichtungsseitige Kommunikationseinrichtung eine Kommunikationsverbindung aufzubauen, beispielsweise unter Verwendung von W-LAN oder LTE-V. Dieser initiale, beispielsweise bei Einfahrt in die Parkumgebung vorgesehene Aufbau einer Kommunikationsverbindung 1 zwischen der Infrastruktureinrichtung (Domäne I) und einem Kraftfahrzeug (Domäne II), welches vorliegend ein eine vollautomatische Fahrzeugführungsfunktion realisierendes Fahrzeugsystem aufweist, ist durch die Schritte S1 und S2 in Fig. 1 angedeutet. Nach der Anmeldung des Kraftfahrzeugs durch Aufbau der Kommunikationsverbindung 1 erhält das Kraftfahrzeug von der Infrastruktureinrichtung, wie durch den Pfeil 2 symbolisiert, eine digitale Karte 3 der Parkumgebung, die in einem Schritt S3 durch das Kraftfahrzeug genutzt wird, um eine Route zu einem insbesondere auch von der Infrastruktureinrichtung zugewiesenen Parkplatz zu ermitteln.

Dabei ist vorliegend im Schritt S2 eine Besonderheit gegeben, nachdem innerhalb der digitalen Karte 3 Unterbereiche markiert sind, in denen aufgrund vorhandener Umgebungssensoren der Navigationsumgebung eine Möglichkeit zur Unterstützung des Kraftfahrzeugs bei der vollständig automatischen Fahrzeugführung durch Risikoeinschätzung seitens der Infrastruktureinrichtung besteht, wie im Folgenden noch näher dargelegt werden wird. Die Route im Schritt S3 wird so bestimmt, dass eine maximale Unterstützung entlang der Route möglich ist, mithin ein möglichst großer Anteil der Route durch Unterbereiche, in denen eine Unterstützung möglich ist, führt.

Während des Betriebs in der Navigationsumgebung findet vorliegend durchgängig ein autonomer Betrieb des Kraftfahrzeugs mittels der vollautomatischen Fahrzeugführungsfunktion statt, wie durch den Schritt S4 angedeutet. Dabei werden zur Trajektorienberechnung und Kollisionsberechnung kraftfahrzeugseitige Sensoren für Betriebsdaten und Umfelddaten des Kraftfahrzeugs genutzt. Die Funktionsgrenzen der Fahrzeugführungsfunktion im Schritt S4 werden durch Grenzbetriebsparameter der Fahrzeugführungsfunktion beschrieben. Funktionsgrenzen können die maximal zulässige Dynamik und/oder zulässige/nicht zulässige Manöver beschreiben.

Diese Funktionsgrenzen beeinflussen, welche Dynamik maximal innerhalb des Kraftfahrzeugs auftreten kann und den zusicherbaren Anhalteweg. Diese Informationen werden als Handlungsparameter 5 des Kraftfahrzeugs nebst weiteren Handlungsparametern 5, die den aktuell geplanten weiteren Fahrtablauf des Kraftfahrzeugs betreffen, insbesondere die Trajektorienplanung, gemäß dem Pfeil 4 regelmäßig aktualisiert an die Infrastruktureinrichtung übersendet.

Kontinuierlich, mithin zyklisch aktualisierend, werden in einem Schritt S5 seitens der Infrastruktureinrichtung verschiedene Eingangsdaten genutzt, um eine Risikoeinschätzung in Form einer Risikoinformation 8 für jedes innerhalb der Navigationsumgebung betriebene Kraftfahrzeug kraftfahrzeugspezifisch zu ermitteln, weswegen zunächst Umgebungsdaten 6 der bereits genannten Umgebungssensoren sowie optional zusätzliche, von den Kraftfahrzeugen übermittelte Informationen genutzt werden, um eine aktuelle dynamische Objekte in der Navigationsumgebung beschreibende Verkehrssituationsinformation zu ermitteln. Diese Verkehrssituationsinformation wird gemeinsam mit der die stationären Objekte und Eigenschaften der Navigationsumgebung beschreibenden digitalen Karte 3, den Handlungsparametern 5 sowie vorliegend auch einer Historieninformation 7, die auch in der digitalen Karte 3 abgespeichert sein kann und die in der Vergangenheit eingetretene Schadensfälle und/oder Risikofälle beschreibt, benutzt, um die Risikoinformation 8 für die einzelnen, mit der Infrastruktureinrichtung kommunizierenden, autonom betriebenen Kraftfahrzeuge in der Navigationsumgebung zu ermitteln. Hierbei werden nicht mit der Infrastruktureinrichtung kommunizierenden dynamischen Objekten und keine Handlungsparameter 5 liefernden dynamischen Objekten, beispielsweise Fußgängern, Handlungsparameter aus einer Datenbank zugeordnet, wobei zuvor eine entsprechende Klassifizierung des dynamischen Objekts vorgenommen wird. Die Handlungsparameter 5 erweisen sich dabei als besonders nützlich bezüglich einer im Rahmen des Schrittes S5 stattfindenden Prädiktion der Verkehrssituation über einen Prädiktionszeitraums mittels eines Kollisionsalgorithmus, um als einen Leitwert für die Risikoeinschätzung eine Kollisionswahrscheinlichkeit verschiedener statischer und/oder dynamischer Objekte miteinander zu ermitteln.

In der vorliegenden Ausführungsform wird als Risikoinformation 8 wenigstens eine Risikostufe bestimmt, der innerhalb der Kraftfahrzeuge Grenzbetriebsparametersätze sowie gegebenenfalls, worauf noch näher eingegangen werden wird, weitere Betriebsparametersätze zugeordnet sind. Beispielsweise kann als Risikostufe eine mit steigendem Risiko ansteigende Zahl verwendet werden, beispielsweise natürliche Zahlen von Eins bis Sechse oder dergleichen. Die resultierende Risikoinformation 8 für das der Domäne II zugeordnete Kraftfahrzeug ist in Fig. 1 ebenso dargestellt und wird dann gemäß dem Pfeil 9 an das Kraftfahrzeug übermittelt, so dass diesem immer die aktuelle Risikoeinschätzung der Infrastruktureinrichtung bekannt ist.

Die Risikoinformation 8 wird in einem Schritt S6 seitens des Kraftfahrzeugs genutzt, um das Verhalten des Fahrzeugführungsalgorithmus anzupassen, insbesondere durch Einstellung der Grenzbetriebsparameter gemäß dem der Risikostufe zugeordneten Grenzbetriebsparametersatz. Darüber hinaus sind zumindest für einige Risikostufen und/oder gegebenenfalls vorgesehene weitere Risikoinformationen zusätzliche Maßnahmen denkbar, beispielsweise eine Vorkonditionierung von Sicherheitssystemen als andere Fahrzeugsysteme des Kraftfahrzeugs durch Anpassung von Betriebsparametern und/oder eine Anpassung von Erfassungseigenschaften wenigstens eines Sensors des Kraftfahrzeugs, beispielsweise eine Fokussierung auf einen Risikobereich.

Bei einer aktuell ein niedriges Risiko anzeigenden Risikostufe können dem Fahrzeugführungsalgorithmus gemäß dem Schritt S4 größere Freiheiten zugestanden werden, beispielsweise größere erlaubte Geschwindigkeiten und/oder sonstige Dynamikparameter, das bedeutet, die Funktionsgrenzen sind erweitert. Andererseits können bei hohem Risiko die Funktionsgrenzen auch eingeschränkt werden. Dabei ist es bevorzugt, wenn lediglich eine Umparametrierung der Funktionsgrenzen stattfindet und der sonstige Betrieb des Fahrzeugführungsalgorithmus unbeeinflusst bleibt, was die Domäne II hinreichend deutlich von der Domäne I trennt, eine einfache technische Umsetzung ermöglicht und eine klare Verantwortungszuordnung erlaubt.

Die Schritte S5 und S6 werden dabei kontinuierlich durchgeführt, während das Kraftfahrzeug in der Navigationsumgebung betrieben wird, das bedeutet, insbesondere häufig zyklisch wiederholt, beispielsweise sekündlich oder häufiger. Zweckmäßig kann in diesem Zusammenhang eine Kommunikation nur bei einer Veränderung erfolgen, was die Handlungsparameter 5 oder die Risikoinformation 8 angeht.

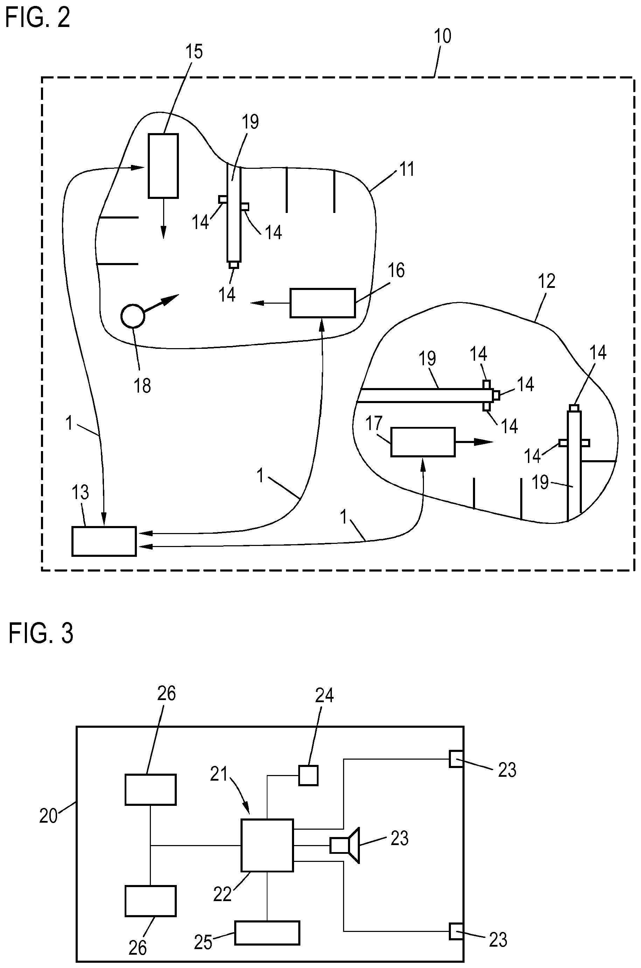

Fig. 2 zeigt eine Prinzipskizze der als Parkumgebung ausgebildeten Navigationsumgebung 10 mit zwei Verkehrssituationen 11, 12 zur Erläuterung des Verfahrens. Die Infrastruktureinrichtung 13 ist dabei nur angedeutet; der Übersichtlichkeit halber sind zudem Kommunikationsverbindungen zu den fest installierten, stationären Umgebungssensoren 14, welche beispielsweise Kameras und/oder entfernungsmessende Sensoren umfassen können, nicht näher dargestellt. Innerhalb der Navigationsumgebung 10 werden verschiedene Kraftfahrzeuge 15, 16, 17 autonom betrieben, wobei deren Kommunikationsverbindungen 1 mit der Infrastruktureinrichtung 13 wiederum angedeutet sind. Als weiteres dynamisches Objekt ist beispielhaft in der Verkehrssituation 11 ein Fußgänger 18 gezeigt.

Ersichtlich ist die Verkehrssituation 11 aufgrund der Wand 19 als unübersichtlich und risikoträchtig einzustufen, wobei vorliegend aufgrund der vielen dynamischen Objekte (Kraftfahrzeuge 15, 16 und Fußgänger 18) eine tatsächlich als äußerst kritisch bewertbare Verkehrssituation 11 gegeben ist. Die Kraftfahrzeuge 15, 16 können sich mit ihren kraftfahrzeugseitigen Umfeldsensoren nicht wahrnehmen; zudem existiert der Fußgänger 18, der sich nahe und in Richtung der Fahrbahn bewegt. Die Verkehrssituation 11 würde mithin mit einer hohen Risikostufe als Risikoinformation 8 für die Kraftfahrzeuge 15, 16 bewertet, welche durch Einschränkung ihrer Funktionsgrenzen im Schritt S6 entsprechend vorsichtig fahren.

Anders so in der Verkehrssituation 12, wo ebenso aufgrund von Wänden 19 eine Unübersichtlichkeit vorliegt, aufgrund der Umgebungssensoren 14 der Infrastruktureinrichtung 13 jedoch bekannt ist, dass das Kraftfahrzeug 17 zurzeit das einzige dynamische Objekt im relevanten Bereich ist, so dass trotz der unübersichtlichen Situation ein autonomer Betrieb sogar in einem erweiterten Umfang dank einer niedrigeren Risikostufe möglich ist.

Fig. 3 zeigt schließlich eine Prinzipskizze eines Kraftfahrzeugs 20, wie es im erfindungsgemäßen Verfahren verwendet werden kann. Das Kraftfahrzeug 20 umfasst ein Fahrzeugsystem 21 zur Realisierung einer vollautomatischen Fahrzeugführungsfunktion, dessen Betrieb durch ein Steuergerät 22, das neben der Durchführung des Schrittes S4 auch zur Durchführung der Schritte S2, S3 und S6 ausgebildet ist, gesteuert wird. Eingangsdaten werden dabei von Umfeldsensoren 23 des Kraftfahrzeugs 20 geliefert, die beispielsweise Kameras, Radarsensoren, Lidarsensoren und dergleichen umfassen können. Weitere Eingangsdaten, die den Betriebszustand des Kraftfahrzeugs 20 beschreiben, können aus weiteren Informationsquellen des Kraftfahrzeugs 20 stammen, insbesondere auch von Betriebssensoren 24 wie einer Inertialplattform. Über eine kraftfahrzeugseitige Kommunikationseinrichtung 25 kann die Kommunikationsverbindung 1 zu der Infrastruktureinrichtung 13 hergestellt werden. Das Fahrzeugsystem 21 ist zudem mit anderen Fahrzeugsystemen, hier Sicherheitssystemen 26, verbunden.

## Patentansprüche

1. Verfahren zum Einstellen von durch ein Fahrzeugsystem (21) eines Kraftfahrzeugs (15, 16, 17, 20) realisierten, vollautomatischen Fahrzeugführungsfunktionen beim Betrieb der Kraftfahrzeuge (15, 16, 17, 20) in einer vordefinierten Navigationsumgebung (10), nämlich einer Parkumgebung, wobei der Navigationsumgebung (10) eine stationäre, mit den Kraftfahrzeugen (15, 16, 17, 20) kommunizierende Infrastruktureinrichtung (13) zugeordnet ist und Funktionsgrenzen der jeweiligen Fahrzeugführungsfunktionen durch Grenzbetriebsparameter der Fahrzeugführungsfunktion definiert sind, wobei die Grenzbetriebsparameter eine maximal zulässige Dynamik im Rahmen der vollautomatischen Fahrzeugführung beschreiben,
wobei seitens der Infrastruktureinrichtung (13) mittels wenigstens teilweise stationär festinstallierter Umgebungssensoren (14) der Navigationsumgebung (10) eine aktuelle dynamische Objekte in der Navigationsumgebung (10) beschreibende Verkehrssituationsinformation ermittelt und gemeinsam mit einer stationäre Objekte und Eigenschaften der Navigationsumgebung (10) beschreibenden digitalen Karte (3) zur Ermittlung wenigstens einer ein Gefährdungs- und/oder Sachschadenpotential beschreibenden Risikoinformation (8) für jedes Kraftfahrzeug (15, 16, 17, 20) unter den dynamischen Objekten verwendet wird, wobei die kraftfahrzeugspezifischen Risikoinformationen (8) an die jeweiligen Kraftfahrzeuge (15, 16, 17, 20) übermittelt werden und das jeweilige Fahrzeugsystem (21) die Grenzbetriebsparameter in Abhängigkeit der Risikoinformation (8) zu engeren Funktionsgrenzen bei einer ein höheres Risiko beschreibenden Risikoinformation (8) und zu weiteren Funktionsgrenzen bei einer ein niedrigeres Risiko beschreibenden Risikoinformation (8) anpasst, wobei die Kraftfahrzeuge (15, 16, 17, 20) und/oder weitere dynamische Objekte, die mit der Infrastruktureinrichtung (13) kommunizieren, wenigstens einen eine maximal mögliche und/oder geplante Dynamik beschreibenden Handlungsparameter (5) an die Infrastruktureinrichtung (13) übermitteln und die jeweiligen Handlungsparameter (5) bei der Ermittlung der Risikoinformation (8) berücksichtigt werden.

2. Verfahren nach Anspruch 1,
wobei als Handlungsparameter (5) eine maximale Geschwindigkeit und/oder eine maximale Beschleunigung und/oder ein eine maximal mögliche Richtungsänderung beschreibender Richtungsparameter und/oder ein eine geplante Trajektorie beschreibender Trajektorienparameter und/oder ein zugesicherter Anhalteweg verwendet werden und/oder die Handlungsparameter (5) wenigstens teilweise aus den Grenzbetriebsparametern und/oder als diese ermittelt werden.

3. Verfahren nach Anspruch 1 oder 2,
wobei mittels der Handlungsparameter (5) ein Aktionsbereich des jeweiligen dynamischen Objekts und/oder eine Kollisionswahrscheinlichkeit mit anderen dynamischen Objekten, insbesondere über wenigstens einen Prädiktionszeitraum, ermittelt und bei der Ermittlung der kraftfahrzeugspezifischen Risikoinformationen (8) verwendet wird.

4. Verfahren nach einem der vorangehenden Ansprüche,
wobei in die Ermittlung der Risikoinformation (8) wenigstens eine in der Vergangenheit eingetretene Schadensfälle und/oder Risikofälle beschreibende Historieninformation (7) eingeht, die seitens der Infrastruktureinrichtung (13) vorgehalten und/oder ermittelt wird.

5. Verfahren nach einem der vorangehenden Ansprüche,
wobei die Risikoinformation (8) eine von mehreren diskreten Risikostufen beschreibend ermittelt wird, wobei den Risikostufen jeweils einzustellende Grenzbetriebsparametersätze zugeordnet sind.

6. Verfahren nach einem der vorangehenden Ansprüche,
wobei die Grenzbetriebsparameter zusätzlich zulässige Fahrmanöver beschreiben.

7. Verfahren nach einem der vorangehenden Ansprüche,
wobei wenigstens ein weiterer Betriebsparameter der Fahrzeugführungsfunktion und/oder des Fahrzeugsystems (21) und/oder eines anderen Fahrzeugsystems des Kraftfahrzeugs (15, 16, 17, 20) in Abhängigkeit der Risikoinformation (8) angepasst wird.

8. Verfahren nach Anspruch 7,
wobei die weiteren Betriebsparameter die Vorkonditionierung wenigstens eines anderen Fahrzeugsystems, insbesondere eines Sicherheitssystems (26), und/oder die Erfassungseigenschaften wenigstens eines Sensors (23, 24) des Kraftfahrzeugs (15, 16, 17, 20) betreffen.

9. Verfahren nach einem der vorangehenden Ansprüche,
wobei in der auch den Kraftfahrzeugen (15, 16, 17, 20) vorliegenden digitalen Karte (3) der Navigationsumgebung (10) Unterbereiche, für die, insbesondere aufgrund der Abdeckung durch die Umgebungssensoren (14), eine Ermittlung der Risikoinformation (8) möglich ist, markiert sind, wobei die Unterbereiche bei der Routenplanung innerhalb des Kraftfahrzeugs (15, 16, 17, 20) berücksichtigt werden.

10. Verfahren nach Anspruch 9,
wobei die Routenplanung die Durchquerung von Unterbereichen maximierend erfolgt.

11. Kraftfahrzeug (15, 16, 17, 20), aufweisend ein eine vollautomatische Fahrzeugführungsfunktion zumindest innerhalb einer Navigationsumgebung (10), nämlich einer Parkumgebung, realisierendes Fahrzeugsystem (21) und eine Kommunikationseinrichtung (25) zur Kommunikation mit einer der Navigationsumgebung (10) zugeordneten Infrastruktureinrichtung (13), wobei Funktionsgrenzen der Fahrzeugführungsfunktion durch Grenzbetriebsparameter der Fahrzeugführungsfunktion definiert sind, wobei die Grenzbetriebsparameter eine maximal zulässige Dynamik im Rahmen der vollautomatischen Fahrzeugführung beschreiben, wobei ein Steuergerät (22) des Fahrzeugsystems (21) zur Anpassung der Grenzbetriebsparameter in Abhängigkeit einer von der Infrastruktureinrichtung (13) empfangenen Risikoinformation (8) zu engeren Funktionsgrenzen bei einer ein höheres Risiko beschreibenden Risikoinformation (8) und zu weiteren Funktionsgrenzen bei einer ein niedrigeres Risiko beschreibenden Risikoinformation (8) und zur Übermittlung wenigstens eines eine maximal mögliche und/oder geplante Dynamik beschreibenden Handlungsparameters (5) an die Infrastruktureinrichtung (13) zur Berücksichtigung bei der Ermittlung der Risikoinformation (8) ausgebildet ist.

## Claims

1. A method for setting fully automatic vehicle guidance functions implemented by a vehicle system (21) of a motor vehicle (15, 16, 17, 20) during operation of the motor vehicles (15, 16, 17, 20) in a predefined navigation environment (10), namely a parking environment, wherein the navigation environment (10) is assigned a stationary infrastructure device (13) communicating with the motor vehicles (15, 16, 17, 20), and functional limits of the respective vehicle guidance functions are defined by limit operating parameters of the vehicle guidance function, wherein the limit operating parameters describe a maximum permissible dynamic within the scope of fully automatic vehicle guidance,
wherein the infrastructure device (13) uses at least partially stationary, permanently installed environmental sensors (14) of the navigation environment (10) to determine current traffic situation information describing dynamic objects in the navigation environment (10) and to use this current traffic information, together with a digital map (3) describing stationary objects and properties of the navigation environment (10) to determine at least one risk information (8) describing a potential hazard and/or property damage for each motor vehicle (15, 16, 17, 20) among the dynamic objects, wherein the motor vehicle-specific risk information (8) is transmitted to the respective motor vehicles (15, 16, 17, 20) and the respective vehicle system (21) adapts the limit operating parameters as a function of the risk information (8) to narrower functional limits in the case of risk information (8) describing a higher risk and to broader functional limits in the case of risk information (8) describing a lower risk, wherein the motor vehicles (15, 16, 17, 20) and/or other dynamic objects that communicate with the infrastructure device (13) transmit at least one action parameter (5) describing a maximum possible and/or planned dynamic to the infrastructure device (13), and wherein the respective action parameters (5) are taken into account when determining the risk information (8).

2. The method according to claim 1,
wherein a maximum speed and/or a maximum acceleration and/or a direction parameter describing a maximum possible change of direction and/or a trajectory parameter describing a planned trajectory and/or a guaranteed stopping distance are used as action parameters (5) and/or the action parameters (5) are determined at least in part from the limit operating parameters and/or are determined as these.

3. The method according to claim 1 or claim 2,
wherein by means of the action parameters (5) an action range of the respective dynamic object and/or a collision probability with other dynamic objects, in particular over at least one prediction period, are used in the determination of the vehicle-specific risk information (8).

4. The method according to any one of the preceding claims,
wherein the determination of the risk information (8) includes at least one historical information (7) describing damage events and/or risk events that have occurred in the past, which historical information is provided and/or determined by the infrastructure device (13).

5. The method according to any one of the preceding claims,
wherein the risk information (8) is determined as describing one of multiple discrete risk levels, wherein respective limit operating parameter sets to be set are assigned to the risk levels.

6. The method according to any one of the preceding claims,
wherein the limit operating parameters additionally describe permissible driving maneuvers.

7. The method according to any one of the preceding claims,
wherein at least one further operating parameter of the vehicle guidance function and/or of the vehicle system (21) and/or of another vehicle system of the motor vehicle (15, 16, 17, 20) is adapted as a function of the risk information (8).

8. The method according to claim 7,
wherein the further operating parameters relate to the preconditioning of at least one other vehicle system, in particular a safety system (26), and/or the detection characteristics of at least one sensor (23, 24) of the motor vehicle (15, 16, 17, 20).

9. The method according to any one of the preceding claims,
wherein in the digital map (3) of the navigation environment (10) also available to the motor vehicles (15, 16, 17, 20) sub-regions are marked, for which it is possible to determine the risk information (8), in particular on the basis of coverage by the environmental sensors (14), wherein the sub-regions are taken into account during route planning within the motor vehicle (15, 16, 17, 20).

10. The method according to claim 9,
wherein route planning is performed in a manner that maximizes the crossing of sub-regions.

11. A motor vehicle (15, 16, 17, 20) comprising a vehicle system (21) implementing a fully automatic vehicle guidance function at least within a navigation environment (10), namely a parking environment, and a communication device (25) for communicating with an infrastructure device (13) associated with the navigation environment (10), wherein functional limits of the vehicle guidance function are defined by limit operating parameters of the vehicle guidance function, wherein the limit operating parameters describe a maximum permissible dynamic within the scope of the fully automatic vehicle guidance, wherein a control unit (22) of the vehicle system (21) is configured for adapting the limit operating parameters depending on risk information (8) received from the infrastructure device (13) to narrower functional limits in the case of risk information (8) describing a higher risk and to broader functional limits in the case of risk information (8) describing a lower risk, and for transmitting at least one action parameter (5) describing a maximum possible and/or planned dynamic to the infrastructure device (13) for consideration in determining the risk information (8).

## Revendications

1. Procédé de réglage de fonctions de guidage de véhicule entièrement automatisées, réalisées par un système (21) d'un véhicule automobile (15, 16, 17, 20) lors du fonctionnement des véhicules automobiles (15, 16, 17, 20) dans un environnement de navigation (10) prédéfini, à savoir un environnement de stationnement, dans lequel à l'environnement de navigation (10) est associé un dispositif d'infrastructure (13) stationnaire communiquant avec les véhicules automobiles (15, 16, 17, 20), et des limites des fonctions de guidage de véhicule respectives sont définies par des paramètres de fonctionnement limite de la fonction de guidage de véhicule, dans lequel les paramètres de fonctionnement limite décrivent une dynamique autorisée au maximum dans le cadre du guidage de véhicule entièrement automatisé,
dans lequel du côté du dispositif d'infrastructure (13), une information de situation de trafic décrivant des objets dynamiques actuels dans l'environnement de navigation (10) est déterminée au moyen de capteurs d'environnement (14) installés au moins partiellement de manière stationnaire de l'environnement de navigation (10), et utilisée conjointement avec une carte (3) numérique décrivant des objets stationnaires et des propriétés de l'environnement de navigation (10) pour la détermination au moins d'une information de risque (8) décrivant un potentiel de risque ou de dommage matériel pour chaque véhicule automobile (15, 16, 17, 20) parmi les objets dynamiques, dans lequel les informations de risque (8) spécifiques au véhicule automobile sont transmises aux véhicules automobiles (15, 16, 17, 20) respectives et le système de véhicule (21) respectif adapte les paramètres de fonctionnement limite en fonction de l'information de risque (8) aux limites de fonction plus étroites en cas d'information de risque (8) décrivant un risque plus élevé et à d'autres limites de fonction en cas d'information de risque (8) décrivant un risque plus faible, dans lequel les véhicules automobiles (15, 16, 17, 20) et/ou d'autres objets dynamiques qui communiquent avec le dispositif d'infrastructure (13), transmettent au moins un paramètre d'action (5) décrivant une dynamique possible au maximum et/ou planifiée au dispositif d'infrastructure (13) et les paramètres d'action (5) respectifs sont pris en considération lors de la détermination de l'information de risque (8).

2. Procédé selon la revendication 1,
dans lequel une vitesse maximale et/ou une accélération maximale et/ou un paramètre directionnel décrivant une modification de direction possible au maximum et/ou un paramètre de trajectoire décrivant une trajectoire planifiée et/ou une distance d'arrêt assurée sont utilisés comme paramètre d'action (5) et/ou les paramètres d'action (5) sont déterminés au moins partiellement à partir des paramètres de fonctionnement limite et/ou comme ceux-ci.

3. Procédé selon la revendication 1 ou 2,
dans lequel une zone d'action de l'objet dynamique respectif et/ou une vraisemblance de collision avec d'autres objets dynamiques est déterminée en particulier sur au moins une période de prédiction et est utilisée lors de la détermination des informations de risque (8) spécifiques au véhicule automobile au moyen des paramètres d'action (5).

4. Procédé selon l'une quelconque des revendications précédentes,
dans lequel au moins une information d'historique (7) décrivant des sinistres et/ou des risques survenus dans le passé entre dans la détermination de l'information de risque (8), laquelle est conservée et/ou déterminée du côté du dispositif d'infrastructure (13).

5. Procédé selon l'une quelconque des revendications précédentes,
dans lequel l'information de risque (8) est déterminée en décrivant un parmi plusieurs niveaux de risque discrets, dans lequel respectivement des ensembles de paramètres de fonctionnement limite à régler sont associés aux niveaux de risque.

6. Procédé selon l'une quelconque des revendications précédentes,
dans lequel les paramètres de fonctionnement limite décrivent des manœuvres de conduite autorisées en outre.

7. Procédé selon l'une quelconque des revendications précédentes,
dans lequel au moins un autre paramètre de fonctionnement de la fonction de guidage de véhicule et/ou du système de véhicule (21) et/ou d'un autre système du véhicule automobile (15, 16, 17, 20) est adapté en fonction de l'information de risque (8).

8. Procédé selon la revendication 7,
dans lequel les autres paramètres de fonctionnement concernent le préconditionnement d'au moins un autre système de véhicule, en particulier d'un système de sécurité (26) et/ou les propriétés de détection d'au moins un capteur (23, 24) du véhicule automobile (15, 16, 17, 20).

9. Procédé selon l'une quelconque des revendications précédentes,
dans lequel dans la carte (3) numérique présente aussi dans les véhicules automobiles (15, 16, 17, 20) de l'environnement de navigation (10), des zones inférieures sont marquées, pour lesquelles une détermination de l'information de risque (8) est possible en particulier en raison de la couverture par les capteurs d'environnement (14), dans lequel les zones inférieures sont prises en considération lors de la planification de l'itinéraire dans le véhicule automobile (15, 16, 17, 20).

10. Procédé selon la revendication 9,
dans lequel la planification de l'itinéraire est effectuée en maximisant la traversée de zones inférieures.

11. Véhicule automobile (15, 16, 17, 20), présentant un système de véhicule (21) réalisant une fonction de guidage de véhicule entièrement automatisée au moins dans un environnement de navigation (10), à savoir un environnement de stationnement et un dispositif de communication (25) pour la communication avec un dispositif d'infrastructure (13) associé à l'environnement de navigation (10), dans lequel des limites de la fonction de guidage de véhicule sont définies par des paramètres de fonctionnement limite de la fonction de guidage de véhicule, dans lequel les paramètres de fonctionnement limite décrivent une dynamique autorisée au maximum dans le cadre du guidage de véhicule entièrement automatisé, dans lequel un dispositif de commande (22) du système de véhicule (21) est formé pour l'adaptation des paramètres de fonctionnement limite en fonction d'une information de risque (8) reçue par le dispositif d'infrastructure (13) à des limites de fonction plus étroites pour une information de risque (8) décrivant un risque plus élevé et à d'autres limites de fonction pour une information de risque (8) décrivant un risque plus faible et pour la transmission d'au moins un paramètre d'action (5) décrivant une dynamique possible au maximum et/ou planifiée au dispositif d'infrastructure (13) pour la prise en considération lors de la détermination de l'information de risque (8).
